# EUROPEAN PATENT SPECIFICATION

(11) **EP 2 568 622 B1**
(45) Date of publication and mention of the grant of the patent: **16.12.2015**
(21) Application number: 11824599.2
(22) Date of filing: 16.09.2011
(51) Int. Cl.: H04B 7/04, H04B 7/06, H04W 72/04

(54) **METHOD AND DEVICE FOR PROCESSING CODEBOOK SUBSET RESTRICTION**
VERFAHREN UND VORRICHTUNG ZUR VERARBEITUNG VON CODEBUCH-SUBSETEINSCHRÄNKUNGEN
PROCÉDÉ ET DISPOSITIF DE TRAITEMENT D'UNE RESTRICTION À UN SOUS-ENSEMBLE D'UN LIVRE DE CODE

(30) Priority: 16.09.2010 CN 201010285420
(43) Date of publication of application: 13.03.2013
(73) Proprietor: China Academy of Telecommunications Technology, Hai Dian District Beijing 100191 (CN)
(72) Inventor: JING, Meifang, Beijing 100191 (CN); GAO, Qiubin, Beijing 100191 (CN); ZHANG, Ranran, Beijing 100191 (CN); SUN, Shaohui, Beijing 100191 (CN); XIAO, Guojun, Beijing 100191 (CN); TAMRAKAR, Rakesh, Beijing 100191 (CN)
(74) Representative: Tischner, Oliver
(86) International application number: PCT/CN2011/079711
(87) International publication number: WO 2012/034529

(56) References cited:
- WO-A1-2009/134357
- WO-A2-2009/025619
- WO-A2-2009/025619
- CN-A- 101 330 479
- CN-A- 102 082 637
- '3GPP Technical Specification Group Radio Access Network; Evolved Universal Terrestrial Radio Access (E-UTRA); Physical layer procedures (Release 9)' 3GPP TS 36.213 V9.2.0 June 2010, pages 35 - 38, XP002662088
- BISHWARUP MONDAL ET AL.: 'Rank-Independent codebook Design from a Quaternary Alphabet' SIGNALS, SYSTEMS AND COMPUTERS, 2007. ACSSC 2007 04 November 2007 - 07 November 2007, pages 297 - 300, XP031242101

## Description

### Field

The present invention relates to the field of wireless communication and particularly to a method and device for processing a codebook subset restriction.

### Background

A Multiple Input Multiple Output (MIMO) system adopts a plurality of transmit and receive antennas and utilizes joint processing of a signal in the space, time and frequency domains for velocity, diversity and array gains. In the MIMO system, if a transmitter can know channel information somehow, then it can optimize a transmission signal according to a channel characteristic to improve the quality of reception and to lower a requirement on the complexity of a receiver. In general, a Time Division Duplex (TDD) system can obtain channel information due to channel reciprocity, but a Frequency Division Duplex (FDD), or the TDD system in some special cases, has to require channel information to be fed back from a receiver. Quantified channel information is typically fed back in a real system to lower a feedback overhead and a feedback delay. Channel information can be quantified for a channel matrix and a statistic thereof or for a preprocessing parameter recommended by the receiver. The quantified channel information is mapped into a set constituted of a limited number of elements, which is referred to as a codebook.

In order to stabilize mutual interference between cells for the sake of improving the accuracy of a Channel Quality Indicator (CQI) reporting by a User Equipment (UE), a method for restricting a codebook subset by higher-layer signalling to signal a codebook subset restriction has been defined in the Release 8 (Rel-8), and the signalling is referred to as *codebookSubsetRestriction* in the Rel-8. Specifically a Precoding Matrix Indicator(s) (PMI) and/or a Rank Indicator(s) (RI) reported from the UE are/is restricted by *codebookSubsetRestriction* configured in higher-layer signalling. For a specific precoding codebook and a relevant transmission mode, whether respective precoding matrixes in all the codebooks are available is specified in a bitmap approach to thereby indicate a codebook subset available to the UE. A codebook subset restriction may be applied to open loop and closed loop multiplexing, multi-user MIMO and precoding of a closed loop with an RI=1. A specific correspondence relationship is as depicted in Table 1.

**Table 1: The number of bits of codebook subset restriction for different transmission modes**

| | Number of bits *A*_{c} | |
|---|---|---|
| | 2 antenna ports | 4 antenna ports |
| Transmission mode 3 | 2 | 4 |
| Transmission mode 4 | 6 | 64 |
| Transmission mode 5 | 4 | 16 |
| Transmission mode 6 | 4 | 16 |
| Transmission mode 8 | 6 | 32 |

| | | |
|---|---|---|
| Where *A*_{c} represents the number of bits included in *codebookSubsetRestriction* and corresponds to the number of all the available precoding matrixes in a corresponding transmission mode. | | |

A new transmission mode is added to the Rel-10 as a transmission mode 9. In the case that a PMI feedback is configured, a channel is measured and fed back based upon a Channel-State Information Reference Signal (CSI-RS) and a signal is demodulated based upon a UE-specific Reference Signal (UE-RS) in the transmission mode 9. Channel measurement and feedback via at most 8 CSI-RS ports is supported. A restriction of a codebook subset will also be supported in the Rel-10, and the number of bits of a codebook subset restriction corresponding to 8 antenna ports has not yet been defined so far.

Codebook subset restrictions in the existing Long Term Evolution-Advanced (LTE) Rel-8/9 are defined for 2 and 4 antenna ports, and the size of a codebook is not vary large with 2 and 4 antenna ports. With 4 antenna ports, for example, the size of a codebook at each rank is 4 bits, and then 64 bits in total are required for a codebook subset at 4 ranks. However a dual-codebook feedback mechanism including a codebook C1 reflecting bandwidth/long-term information and a codebook C2 reflecting frequency selectivity/short-term information is adopted in the Rel-10, where the C1 and the C2 are finally integrated into a codebook C. The currently accepted sizes of codebooks with 8 antenna ports are as depicted in Table 2:

**Table 2: The sizes of C1 and C2 and integrated codebook C with 8 antenna ports (the number of precoding matrixes)**

| | **C1** | **C2** | **C** |
|---|---|---|---|
| Rank1 | 16 | 16 | 16×16=256 |
| Rank2 | 16 | 16 | 16×16=256 |
| Rank3 | 4 | 16 | 4×16=64 |
| Rank4 | 4 | 8 | 4×8=32 |
| Rank5 | 4 | 1 | 4×1=4 |
| Rank6 | 4 | 1 | 4×1=4 |
| Rank7 | 4 | 1 | 4×1=4 |
| Rank8 | 1 | 1 | 1×1=1 |
| Total | 53 | 60 | 621 |

Specifically an 8-antenna port codebook in the Rel-10 is represented as a two-dimension table where a row index *i*₁ corresponds to an index in the codebook C1 and is represented as a first PMI in a feedback and a column index *i*₂ corresponds to an index in the codebook C2 and is represented as a second PMI in a feedback

A drawback of the prior art lies in that if each precoding matrix is mapped to 1-bit information as in the bitmap approach in the Rel-8, then 621 bits are required for the signalling *codebookSubsetRestriction,* thus resulting in a considerable signalling overhead.

An international application No.: WO 2009/134357 A1 provides for an improved application of signal strength weightings in a SDMA sectorized cellular network. The improved signal strength weightings application is conducted through the improved selection of weightings from a new codebook subset or by the selection of weightings from a larger codebook subset.

An international application No.: WO 2009/025619 A2 provides for methods and systems for reducing uplink overhead from a UE when performing communications in a mobile network. Reductions in uplink overhead may be achieved by using different control channel structures depending upon, for example, a subset of permissible transmit parameters which are under consideration for a particular connection.

### Summary

An aspect of the invention is to provide a method and device for processing a codebook subset restriction so as to address the related problem(s) of restricting a codebook subset in the case of multiple antenna ports.

There is a method for processing a codebook subset restriction in an embodiment of the invention, which includes the operations of:
grouping precoding matrixes in a codebook at each rank in a transmission mode with N antenna ports respectively, where N is a natural number, and in the transmission mode with N antenna ports, rank values can be any number between 1 and N, and wherein the codebook having a matrix structure ; and
identifying the state of each group as restricted or unrestricted by one bit after grouping, wherein restricted means that a group is unavailable, and unrestricted means that the group is available;
wherein grouping the precoding matrixes in the codebooks at respective ranks respectively includes any one of:
grouping per row to take each row of precoding matrixes in the codebooks as a group;
grouping per column to take each column of precoding matrixes in the codebooks as a group;
grouping respectively per row and column to take each row of precoding matrixes and each column of precoding matrixes in the codebooks respectively as groups and to identify a precoding matrix as restricted if a row or column, to which the precoding matrix belongs, is restricted after grouping; and
grouping per precoding matrix element to take precoding matrixes with identical precoding matrix elements in the codebooks as a group.

Particularly the codebooks at different ranks can be grouped in the same or different ways.

Preferably the method further includes:
setting, information to identify the respective groups in the codebooks as restricted or unrestricted, into a codebook subset restriction option of higher-layer signalling.

Preferably the method further includes:
transmitting the higher-layer signalling to a UE to instruct the UE to report a Precoding Matrix Indicator(s), PMI, and/or a Rank Indicator, RI(s), according to the codebook subset restriction option in the higher-layer signalling.

There is a method for reporting channel information in an embodiment of the invention, which includes the operations of:
receiving higher-layer signalling; and
reporting a PMI(s) and/or an RI(s) according to a codebook subset restriction option in the higher-layer signalling.

There is a device for processing a codebook subset restriction in an embodiment of the invention, which includes:
a storing module configured to store a grouping rule under which precoding matrixes in a codebook at each rank in a transmission mode with N antenna ports are grouped, wherein N is a natural number, and in the transmission mode with N antenna ports, rank values can be any number between 1 and N, and wherein the codebook having a matrix structure; and
an identifying module configured to identify the state of each group as restricted or unrestricted by one bit, after the precoding matrixes in the codebooks at the respective ranks with N antenna ports are grouped respectively under the grouping rule, wherein restricted means that a group is unavailable, and unrestricted means that the group is available;
wherein the storing module includes any one or combination of the following units:
a row grouping unit configured to store the grouping rule under which each row of precoding matrixes in the codebooks is taken as a group;
a column grouping unit configured to store the grouping rule under which each column of precoding matrixes in the codebooks is taken as a group;
a row and column grouping unit configured to store the grouping rule under which each row of precoding matrixes and each column of precoding matrixes in the codebooks are taken respectively as groups and to identify a precoding matrix as restricted if it is both restricted and unrestricted after grouping; and
an element grouping unit configured to store the grouping rule under which precoding matrixes with identical precoding matrix elements in the codebooks are taken as a group.

Particularly the codebooks at the respective ranks can have the same or different grouping rules.

Preferably the device further includes:
a setting module configured to set, information to identify the respective groups in the codebooks at the respective ranks as restricted or unrestricted, into a codebook subset restriction option of higher-layer signalling.

Preferably the device further includes:
a transmitting module configured to transmit the higher-layer signalling to a UE to instruct the UE to report a PMI(s) and/or an RI(s) according to the codebook subset restriction option in the higher-layer signalling.

There is a device for reporting channel information in an embodiment of the invention, which includes:
a receiving module configured to receive higher-layer signalling; and
a reporting module configured to report a PMI(s) and/or an RI(s) according to a codebook subset restriction option in the higher-layer signalling.

An advantageous effect of the invention are as follows:

In the technical solution according to the embodiments of the invention, an overhead of signalling required for a codebook subset restriction can be reduced as a result of firstly grouping and then performing a restriction process on codebooks.

### Brief Description of the Drawings

Fig. 1 is a schematic diagram of a method for processing a codebook subset restriction according to an embodiment of the invention;
Fig. 2 is a schematic diagram of a method for reporting channel information according to an embodiment of the invention;
Fig. 3 is a schematic structural diagram of a device for processing a codebook subset restriction according to an embodiment of the invention; and
Fig. 4 is a schematic structural diagram of a device for reporting channel information according to an embodiment of the invention.

### Detailed Description of the Embodiments

In a multi-antenna system based upon linear precoding, a receiver selects an appropriate precoding matrix (or vector) index from a linear precoding codebook according to channel information and feeds the index back to a transmitter so that the transmitter can perform appropriate preprocessing on a transmission signal to improve the efficiency and/or reliability of information transmission. A method for restricting a codebook subset by higher-layer signalling to reduce the number of beams in a codebook has been defined in the Rel-8 so as to stabilize mutual interference between cells for the sake of improving the accuracy of a CQI reporting by a UE. This function will also be supported in the Rel-10, but if each precoding matrix in a codebook is mapped to 1-bit information as in the bitmap approach in the Rel-8, then a considerable signalling overhead will be necessary due to the large size of an 8-antenna ports codebook in the Rel-10. In view of this, there is a new solution in embodiments of the invention to restrict codebook subset for the possibility of a lowered overhead of high-layer signalling. Embodiments of the invention will be described below with reference to the drawings.

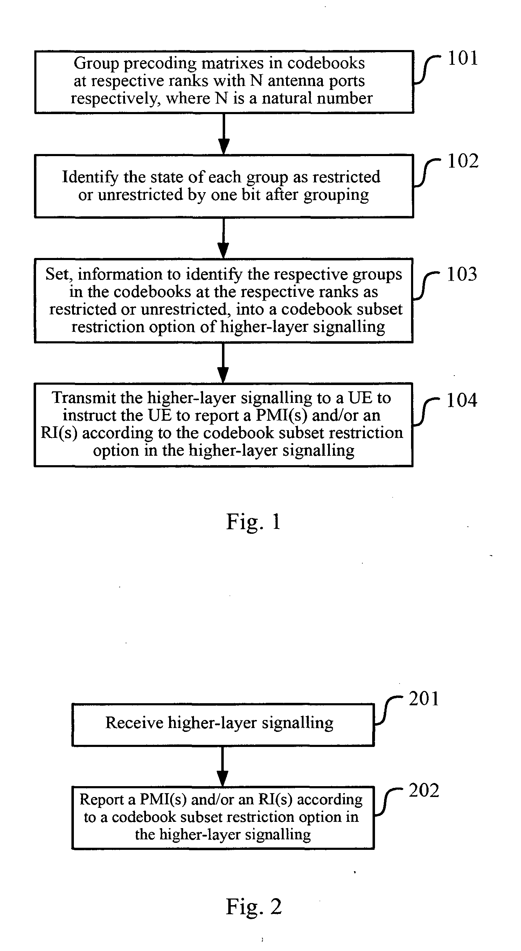

Fig. 1 is a schematic diagram of a method for processing a codebook subset restriction, and as illustrated, the restricting process may include the following operations:

An operation 101 is to group precoding matrixes in codebooks at respective ranks with N antenna ports respectively, where N is a natural number;

An operation 102 is to identify by one bit the state of each group as restricted or unrestricted, that is, whether the group of precoding matrixes is available, after grouping.

In an implementation, the parameter with a name of *codebookSubsetRestriction,* which is merely a parameter defined in the LTE, is described, but the parameter may have another variable name in a future system or another system, therefore the technical solution according to the embodiments of the invention is not intended to be applicable only to an option of signalling as referred to the specific variable name *codebookSubsetRestriction* in the LTE although the following description will be given in connection with such a name.

In the following implementations, a description with N=8 and the accepted 8 antenna ports codebooks in Rel -10 will be given as an example,, but those skilled in the art will readily appreciate that this technical idea of grouping can also be applicable to an implementation with a larger number of antenna ports but will not be limited to only an implementation with 8 antenna ports; and codebooks at the respective ranks will be described taking the generally accepted codebooks as an example, and with a newly added or modified codebook, this technical idea of grouping can simply be applied to the new codebook but will not be limited to the codebooks listed in the following embodiments which also can be apparent to those skilled in the art.

In an implementation and taking 8 antenna ports as an example, the codebooks at the respective ranks with 8 antenna ports can be grouped and each group can be identified by one bit as restricted or unrestricted so as to reduce an overhead of the higher-layer signalling *codebookSubsetRestriction.* Table 3 depicts a schematic table of codebooks at the rank 1, where *i*₁ and *i*₂ correspond respectively to precoding matrix indexes of codebooks C1 and C2. Of course, those skilled in the art will readily appreciate that the row and column locations of the indexes *i*₁ and *i*₂ can be interchanged without influencing precoding matrixes of the entire resultant codebook. A process on codebooks at the rank 1 will be described in an implementation below as an example.

**Table 3: Schematic diagram of codebooks at the rank 1**

| *i*₁ | *i*₂ | | | | | | | |
|---|---|---|---|---|---|---|---|---|
| | 0 | 1 | 2 | ... ... | | 13 | 14 | 15 |
| 0 | | | | | | | | |
| 1 | | | | | | | | |
| 2 | | | | | | | | |
| ⋮ | | | | | | | | |
| ⋮ | | | | | | | | |
| 13 | | | | | | | | |
| 14 | | | | | | | | |
| 15 | | | | | | | | |

For better understanding of codebooks grouping, a process on codebooks at the rank 1 will be described below as an example in which codebooks at the respective ranks are grouped in the same way. Of course the codebooks at the respective ranks can alternatively be grouped in different ways in practice; and the codebooks at the respective ranks are grouped for the purpose of a reduced overhead of the higher-layer signalling *codebookSubsetRestriction,* so the codebooks at the respective ranks can be grouped in the same or different ways which will not be correlated necessarily so long as this purpose can be satisfied. Thus the codebooks at the respective ranks can be grouped under the same or different rules also as be readily apparent to those skilled in the art.

The codebooks at the rank may be grouped in any one of the following ways:

### First Embodiment

In this embodiment, the codebooks are grouped per row, where each row of precoding matrixes in the codebooks is taken as a group.

Specifically the codebooks at the respective ranks are grouped per row, for example, each row of precoding matrixes in Table 3 is taken as a group, and then only 16 bits are required for a codebook subset restriction at the rank 1, and 53 bits are required for a total overhead of a codebook subset restriction according to the sizes of the codebooks C1 corresponding to *i*₁ at the respective ranks in Table 2, so each of information bits *a*_{*A_{c}*-1},..., *a*₃, *a*₂, *a*₁, *a*₀, where, *A_{c}* = 53*,* of the higher-layer signalling *codebookSubsetRestriction* indicates a restriction condition of a row of precoding matrixes in codebooks, for example, *a*₀ indicates the first row of the rank 1 codebook , *a*₁₅ indicates the 16^{th} row of the rank 1 codebook , *a*₁₆ indicates the first row of the rank 2 codebook , and a_{Ac-1} indicates the last row of the rank 8 codebook.

### Second Embodiment

In this embodiment, the codebooks are grouped per column, where each column of precoding matrixes in the codebooks is taken as a group.

Specifically the codebooks at the respective ranks are grouped per column, for example, each column of precoding matrixes in Table 3 is taken as a group, and then only 16 bits are required for a codebook subset restriction at the rank 1, and 60 bits are required for a total overhead of a codebook subset restriction according to the sizes of the codebooks C2 corresponding to *i*₂ at the respective ranks in Table 2, so each of information bits *a*_{*A_{c}*-1},..., *a*₃, *a*₂, *a*₁*, a*₀, where, *A_{c}* = 60 *,* of the higher-layer signalling *codebookSubsetRestriction* indicates a restriction condition of a column of precoding matrixes in a codebook.

### Third Embodiment

In this embodiment, the codebooks are grouped respectively per row and column, where each row of precoding matrixes and each column of precoding matrixes in the codebooks are taken respectively as groups, and a precoding matrix will be identified as restricted if a row or column, to which the precoding matrix belongs, is restricted after grouping.

In an implementation, the codebooks at the respective ranks are grouped respectively per row and column, for example, each column of precoding matrixes and each row of precoding matrixes in Table 3 is taken respectively as groups and then 32 bits are required for a codebook subset restriction at the rank 1, and 109 to 113 bits are required for a total codebook subset restriction according to the sizes of the codebooks C1 and C2 corresponding to *i*₁ and *i*₂ at the respective ranks in Table 2 (particularly since only one column is included in the codebook at each of the ranks 5 to 8, no corresponding bit is required to indicate the group corresponding to the column, and at this time there are 109 bits of the codebook subset restriction). Given 109 bits of the codebook subset restriction, each of information bits *a*_{*A_{c}*-1},..., *a*₃, *a*₂, *a*₁*, a*₀, where,

*A_{c}* =109 , corresponding to the higher-layer signalling *codebookSubsetRestriction* indicates a restriction condition of a column of precoding matrixes or a row of precoding matrixes in a codebook. The codebooks can be grouped firstly per row and then per column or firstly per column and then per row. It shall be noted that one precoding matrix correspond to one row indicating bit and one column indicating bit when the codebooks are grouped per both row and column, and at this time the precoding matrix will be restricted and can not be used so long as either of indicating bits corresponding to the row and the column is 0.

### Fourth Embodiment

In this embodiment, the codebooks are grouped according to whether precoding matrixes are identical, where identical precoding matrixes in the codebooks are taken as a group.

In an implementation, identical precoding matrixes at the respective ranks are taken as a group, there are a large number of pairs of identical precoding matrixes in the resultant codebooks from the currently generally accepted 8-antenna port codebooks, and the identical precoding matrixes being taken as a group can reduce an overhead of bits required for a codebook subset restriction. Taking the rank 1 as an example, the first precoding matrix in the first row is taken as the first group, and the precoding matrixes are grouped per row, where the second precoding matrix in the first row is taken into the first group if it is identical to the first precoding matrix or into the second group if it is different, and so on, and thus the number of resultant groups at each rank can be determined, and the total number of the groups at the respective ranks is determined as the number of bits required for a codebook subset restriction. Of course the precoding matrixes can alternatively be grouped per column without influencing the effect of grouping. This way, among the currently generally accepted codebooks, 128 groups can result at the rank 1, 192 groups can result at the rank 2, and there are no identical precoding matrixes at each of the rank 3 to the rank 8 so that there is a single precoding matrix in a group and 109 groups in total result, thus resulting in 429 groups in total, and then there are information bits *a*_{*A_{c}*-1},..., *a*₃, *a*₂, *a*₁*, a*₀, where, *A_{c}* = 429, corresponding to the higher-layer signalling *codebookSubsetRestriction.*

### Fifth Embodiment

In this embodiment, the codebooks are grouped according to whether beam directions are identical, where precoding matrixes in the same beam direction in the codebooks are taken as a group.

In an implementation, precoding matrixes in the same beam direction at the respective ranks are taken as a group, where the resultant precoding matrix corresponding to the rank r with 8 antenna ports is of 8 × r dimensions, and the beam direction of this precoding matrix is determined by the first half part of the precoding matrix, i.e., the 4 × r part, and those precoding matrixes, among all the precoding matrixes at the rank r, with the same first half part, are taken as a group. Taking the rank 1 as an example, the first precoding matrix in the first row is taken as the first group, and the precoding matrixes are grouped per row, where the second precoding matrix in the first row is taken into the first group if the first half part of the second precoding matrix is identical to the first half part of the first precoding matrix or into the second group if the first half part of the second precoding matrix is different from the first half part of the first precoding matrix, and so on, and thus the number of resultant groups at each rank can be determined, and the total number of the groups at the respective ranks is determined as the number of bits required for a codebook subset restriction. Of course the precoding matrixes can alternatively be grouped per column without influencing the effect of grouping. This way, among the currently generally accepted codebooks, 32 groups can result at the rank 1, 96 groups can result at the rank 2, 16 groups can result at the rank 4, and there are no precoding matrixes in the same direction at each of the rank 3 and the rank 5 to the rank 8 so that there is a single precoding matrix in a group and 77 groups in total result, thus resulting in 221 groups in total, and then there are information bits *a*_{*A_{c}*-1},..., *a*₃, *a*₂, *a*₁*, a*₀, with *A_{c}* = 221, corresponding to the higher-layer signalling *codebookSubsetRestriction.*

### Sixth Embodiment

In this embodiment, the codebooks are grouped per precoding matrix element, where precoding matrixes with identical precoding matrix elements in the codebooks are taken as a group.

In an implementation, the codebooks at the respective ranks are grouped per precoding matrix element, for example, precoding matrixes, at the rank 1, constituted of Quadrature Phase Shift Keying (QPSK) elements are taken as a group, precoding matrixes constituted of 8PSK (Phase Shift Keying) elements other than the precoding matrixes constituted of QPSK elements are taken as a group, precoding matrixes constituted of 16PSK elements other than the precoding matrixes constituted of 8PSK elements are taken as a group, and precoding matrixes constituted of 32PSK elements other than the precoding matrixes constituted of 16PSK elements are taken as a group, and thus 4 groups in total result; 4 groups in total result also at the rank 2 like the rank 1; and precoding matrixes at each of the rank 3 to the rank 8 are constituted of 16PSK elements, and thus 3 groups result at each of the ranks, thus resulting in 26 groups in total, and then there are information bits *a*_{*A_{c}*-1},..., *a*₃, *a*₂, *a*₁*, a*₀, with *A_{c}* = 26, corresponding to the higher-layer signalling *codebookSubsetRestriction.*

The flow of processing a codebook subset restriction may further include:

An operation 103 is to set, information to identify the respective groups in the codebooks at the respective ranks as restricted or unrestricted, into a codebook subset restriction option of higher-layer signalling.

After setting the higher-layer signalling, the process may further include:

An operation 104 is to transmit the higher-layer signalling to a UE to instruct the UE to report a Precoding Matrix Indicator(s) (PMI) and/or a Rank Indicator(s) (RI) according to the codebook subset restriction option in the higher-layer signalling.

Correspondingly an embodiment of the invention further provides a method for reporting channel information, which will be described below.

Fig. 2 is a schematic flow chart of performing a method for reporting channel information, and as illustrated, the reporting process may include the following operations:

An operation 201 is to receive higher-layer signalling.

In an implementation, the higher-layer signalling is used to instruct a UE to report a Precoding Matrix Indicator(s) (PMI) and/or a Rank Indicator(s) (RI) according to a codebook subset restriction option in the higher-layer signalling, and reference can be made to the foregoing embodiments for setting of the codebook subset restriction option.

An operation 202 is to report a PMI(s) and/or an RI(s) according to a codebook subset restriction option in the higher-layer signalling.

Based upon the same inventive idea, embodiments of the invention further provide a device for processing a codebook subset restriction and a device for reporting channel information, and since these devices address the problem under a similar principle to the method for processing a codebook subset restriction and the method for reporting channel information, reference can be made to the implementations of the methods for implementations of these devices, and a repeated description thereof will be omitted here.

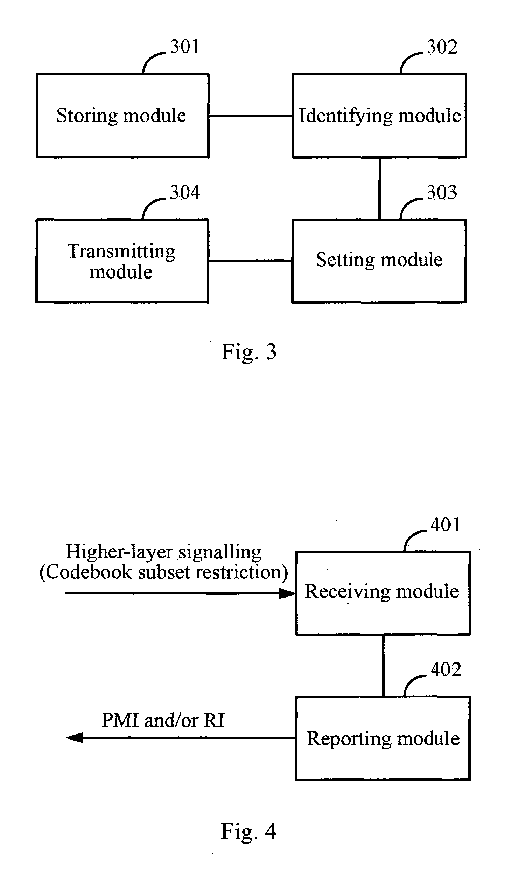

Fig. 3 is a schematic structural diagram of a device for processing a codebook subset restriction, and as illustrated, the device includes:
a storing module 301 configured to store the grouping rule under which precoding matrixes in codebooks at respective ranks are grouped; and
an identifying module 302 configured to identify the state of each group as restricted or unrestricted by one bit, after the precoding matrixes in the codebooks at the respective ranks with N antenna ports are grouped respectively under the grouping rule, where N is a natural number above or equal to 8.

In an implementation, the storing module may include any one or combination of the following units:
a row grouping unit configured to store the grouping rule under which each row of precoding matrixes in the codebooks is taken as a group;
a column grouping unit configured to store the grouping rule under which each column of precoding matrixes in the codebooks is taken as a group;
a row and column grouping unit configured to store the grouping rule under which each row of precoding matrixes and each column of precoding matrixes in the codebooks are taken respectively as groups and to identify a precoding matrix as restricted if a row or column, to which the precoding matrix belongs, is restricted after grouping;
a precoding matrix grouping unit configured to store the grouping rule under which identical precoding matrixes in the codebooks are taken as a group;
a beam grouping unit configured to store the grouping rule under which precoding matrixes in the same beam direction in the codebooks are taken as a group; and
an element grouping unit configured to store the grouping rule under which precoding matrixes with identical precoding matrix elements in the codebooks are taken as a group.

In an implementation, the codebooks at the respective ranks may have the same or different grouping rules.

The device may further include:
a setting module 303 configured to set, information to identify the respective groups in the codebooks at the respective ranks as restricted or unrestricted, into a codebook subset restriction option of higher-layer signalling.

The device may further include:
a transmitting module 304 configured to transmit the higher-layer signalling to a UE to instruct the UE to report a Precoding Matrix Indicator(s) (PMI) and/or a Rank Indicator(s) (RI) according to the codebook subset restriction option in the higher-layer signalling.

Fig. 4 is a schematic structural diagram of a device for reporting channel information, and as illustrated, the device may include:

A receiving module 401 configured to receive higher-layer signalling;

In an implementation, the higher-layer signalling is used to instruct a UE to report a Precoding Matrix Indicator(s) (PMI) and/or a Rank Indicator(s) (RI) according to a codebook subset restriction option in the higher-layer signalling, and reference can be made to the foregoing embodiments for setting of the codebook subset restriction option.

A reporting module 402 configured to report a PMI(s) and/or an RI(s) according to the codebook subset restriction option in the higher-layer signalling.

For the convenience of a description, the respective components of the foregoing devices have been described respectively by functionally dividing them into respective modules or units. Of course the functions of the respective modules or units can be performed in the same one or a plurality of items of software or hardware to put the invention into practice.

As can be apparent from the foregoing embodiments, codebooks are grouped and each group corresponds to a codebook subset restriction bit in the technical solutions according to the invention.

Various grouping embodiments have been further provided.

With the technical solutions according to the embodiments of the invention, codebooks are grouped and then subjected to a restricting process, thus result in a reduced overhead of signalling required for a codebook subset restriction.

Those skilled in the art shall appreciate that the embodiments of the invention can be embodied as a method, a system or a computer program product. Therefore the invention can be embodied in the form of an all-hardware embodiment, an all-software embodiment or an embodiment of software and hardware in combination. Furthermore the invention can be embodied in the form of a computer program product embodied in one or more computer useable storage mediums (including but not limited to a disk memory, a CD-ROM, an optical memory, etc.) in which computer useable program codes are contained.

The invention has been described in a flow chart and/or a block diagram of the method, the device (system) and the computer program product according to the embodiments of the invention. It shall be appreciated that respective flows and/or blocks in the flow chart and/or the block diagram and combinations of the flows and/or the blocks in the flow chart and/or the block diagram can be embodied in computer program instructions. These computer program instructions can be loaded onto a general-purpose computer, a specific-purpose computer, an embedded processor or a processor of another programmable data processing device to produce a machine so that the instructions executed on the computer or the processor of the other programmable data processing device create means for performing the functions specified in the flow(s) of the flow chart and/or the block(s) of the block diagram.

These computer program instructions can also be stored into a computer readable memory capable of directing the computer or the other programmable data processing device to operate in a specific manner so that the instructions stored in the computer readable memory create an article of manufacture including instruction means which perform the functions specified in the flow(s) of the flow chart and/or the block(s) of the block diagram.

These computer program instructions can also be loaded onto the computer or the other programmable data processing device so that a series of operational steps are performed on the computer or the other programmable data processing device to create a computer implemented process so that the instructions executed on the computer or the other programmable device provide steps for performing the functions specified in the flow(s) of the flow chart and/or the block(s) of the block diagram.

Although the preferred embodiments of the invention have been described, those skilled in the art benefiting from the underlying inventive concept can make additional modifications and variations to these embodiments. Therefore the appended claims are intended to be construed as encompassing the preferred embodiments and all the modifications and variations coming into the scope of the invention.

Evidently those skilled in the art can make various modifications and variations to the invention without departing from the scope of the invention. Thus the invention is also intended to encompass these modifications and variations thereto so long as the modifications and variations come into the scope of the claims appended to the invention.

## Claims

1. A method for processing a codebook subset restriction, comprising:
grouping (101) precoding matrixes in a codebook at each rank in a transmission mode with N antenna ports respectively, wherein N is a natural number, and in the transmission mode with N antenna ports, rank values can be any number between 1 and N, and wherein the codebook having a matrix structure; and
identifying (102) the state of each group as restricted or unrestricted by one bit after grouping, wherein restricted means that a group is unavailable, and unrestricted means that the group is available;
wherein grouping (101) the precoding matrixes in the codebooks at respective ranks respectively comprises any one of:
grouping per row to take each row of precoding matrixes in the codebooks as a group;
grouping per column to take each column of precoding matrixes in the codebooks as a group;
grouping respectively per row and column to take each row of precoding matrixes and each column of precoding matrixes in the codebooks respectively as groups and to identify a precoding matrix as restricted if a row or column, to which the precoding matrix belongs, is restricted after grouping; and
grouping per precoding matrix element to take precoding matrixes with identical precoding matrix elements in the codebooks as a group.

2. The method of claim 1, further comprising:
setting (103), information to identify the respective groups in the codebooks at the respective ranks as restricted or unrestricted, into a codebook subset restriction option of higher-layer signalling.

3. The method of claim 2, further comprising:
transmitting (104) the higher-layer signalling to a User Equipment, UE, to instruct the UE to report a Precoding Matrix Indicator, PMI, and/or a Rank Indicator, RI, according to the codebook subset restriction option in the higher-layer signalling.

4. A method for reporting channel information, comprising:
receiving (201) the higher-layer signalling according to claim 3; and
reporting (202) a PMI and/or an RI according to the codebook subset restriction option in the higher-layer signalling.

5. A device for processing a codebook subset restriction, comprising:
a storing module (301) configured to store a grouping rule under which precoding matrixes in a codebook at each rank in a transmission mode with N antenna ports are grouped, wherein N is a natural number, and in the transmission mode with N antenna ports, rank values can be any number between 1 and N, and wherein the codebook having a matrix structure; and
an identifying module (302) configured to identify the state of each group as restricted or unrestricted by one bit, after the precoding matrixes in the codebooks at the respective ranks with N antenna ports are grouped respectively under the grouping rule, wherein restricted means that a group is unavailable, and unrestricted means that the group is available;
wherein the storing module (301) comprises any one or combination of the following units:
a row grouping unit configured to store the grouping rule under which each row of precoding matrixes in the codebooks is taken as a group;
a column grouping unit configured to store the grouping rule under which each column of precoding matrixes in the codebooks is taken as a group;
a row and column grouping unit configured to store the grouping rule under which each row of precoding matrixes and each column of precoding matrixes in the codebooks are taken respectively as groups and to identify a precoding matrix as restricted if a row or column, to which the precoding matrix belongs, is restricted after grouping; and
an element grouping unit configured to store the grouping rule under which precoding matrixes with identical precoding matrix elements in the codebooks are taken as a group.

6. The device of claim 5, further comprising:
a setting module (303) configured to set, information to identify the respective groups in the codebooks at the respective ranks as restricted or unrestricted, into a codebook subset restriction option of higher-layer signalling.

7. The device of claim 6, wherein further comprising:
a transmitting module (304) configured to transmit the higher-layer signalling to a UE to instruct the UE to report a PMI and/or an RI according to the codebook subset restriction option in the higher-layer signalling.

8. A device for reporting channel information, comprising:
a receiving module (401) configured to receive the higher-layer signalling according to claim 4; and
a reporting module (402) configured to report a PMI and/or an RI according to the codebook subset restriction option in the higher-layer signalling.

## Patentansprüche

1. Verfahren zur Verarbeitung einer Einschränkung einer Codebuchteilmenge, umfassend:
Gruppieren (101) von Vorkodierungsmatrizen in einem Codebuch in jedem Rang in einem Übertragungsmodus mit jeweils N Antenneneingängen, wobei N eine natürliche Zahl ist, wobei im Übertragungsmodus Rangwerte jede Zahl zwischen 1 und N betragen können und wobei das Codebuch eine Matrixstruktur aufweist; und
Identifizieren (102) des Zustandes jeder Gruppe als eingeschränkt oder uneingeschränkt mit einem Bit nach der Gruppierung, wobei "eingeschränkt" heißt, dass eine Gruppe nicht verfügbar ist, und "uneingeschränkt" heißt, dass die Gruppe verfügbar ist;
wobei die Gruppierung (101) der Vorcodierungsmatrizen in den Codebüchern in den jeweiligen Rängen jeweils einen der nachfolgenden Schritte umfasst:
Gruppieren nach Zeilen, um jede Zeile von Vorcodierungsmatrizen in den Codebüchern als Gruppe zu nehmen;
Gruppieren nach Spalten, um jede Spalte von Vorcodierungsmatrizen in den Codebüchern als Gruppe zu nehmen;
Gruppieren jeweils nach Zeile und Spalte, um jede Zeile von Vorcodierungsmatrizen und jede Spalte von Vorcodierungsmatrizen in den Codebüchern jeweils als Gruppen zu nehmen und eine Vorcodierungsmatrix als eingeschränkt zu identifizieren, wenn eine Zeile oder Spalte, zu der die Vorcodierungsmatrix gehört, nach der Gruppierung eingeschränkt ist; und
Gruppieren nach Vorcodierungsmatrixelement, um Vorcodierungsmatrizen mit identischen Vorcodierungsmatrixelementen in den Codebüchern als Gruppe zu nehmen.

2. Verfahren nach Anspruch 1, ferner umfassend:
Einstellen (103) von Informationen zur Identifizierung der jeweiligen Gruppen in den Codebüchern in den jeweiligen Rängen als eingeschränkt oder uneingeschränkt in einer Option zur Einschränkung von Codebuch-Untersätzen der Signalisierung auf höherer Schicht.

3. Verfahren nach Anspruch 2, ferner umfassend:
Übertragen (104) der Signalisierung auf der höheren Schicht an ein Benutzergerät UE, um dem UE den Befehl zur Anzeige eines Vorcodierungsmatrix-Indikators PMI und/oder eines Rangindikators RI je nach der Option zur Einschränkung von Codebuch-Untersätzen in der Signalisierung auf höherer Schicht zu geben.

4. Verfahren zur Anzeige von Kanaldaten, umfassend:
Empfangen (201) der Signalisierung auf höherer Schicht nach Anspruch 3 und
Anzeigen (202) eines PMI und/oder RI je nach der Option zur Einschränkung des Codebuch-Subsatzes in der Signalisierung auf höherer Schicht.

5. Vorrichtung zur Verarbeitung einer Einschränkung einer Codebuchteilmenge, umfassend:
ein Speichermodul (301), das zur Speicherung einer Gruppierungsregel konfiguriert ist, wonach Vorkodierungsmatrizen in einem Codebuch in jedem Rang in einem Übertragungsmodus mit jeweils N Antenneneingängen gruppiert werden, wobei N eine natürliche Zahl ist, wobei im Übertragungsmodus Rangwerte jede Zahl zwischen 1 und N betragen können und wobei das Codebuch eine Matrixstruktur aufweist; und
ein Identifizierungsmodul (302), das zur Identifizierung des Zustandes jeder Gruppe als eingeschränkt oder uneingeschränkt mit einem Bit nach der Gruppierung konfiguriert ist, wobei "eingeschränkt" heißt, dass eine Gruppe nicht verfügbar ist, und "uneingeschränkt" heißt, dass die Gruppe verfügbar ist;
wobei das Speichermodul (301) eine beliebige oder eine beliebige Kombination aus den nachfolgenden Einheiten umfasst:
eine Zeilengruppierungseinheit, die zur Speicherung der Gruppierungsregel konfiguriert ist, wonach jede Zeile von Vorcodierungsmatrizen in den Codebüchern als Gruppe genommen wird;
eine Spaltengruppierungseinheit, die zur Speicherung der Gruppierungssregel konfiguriert ist, wonach jede Spalte von Vorcodierungsmatrizen in den Codebüchern als Gruppe genommen wird;
eine Zeilen- und Spaltengruppierungseinheit, die derart konfiguriert ist, dass sie die Gruppierungsregel speichert, wonach jede Zeile von Vorcodierungsmatrizen und jede Spalte von Vorcodierungsmatrizen in den Codebüchern jeweils als Gruppen genommen wird, und eine Vorcodierungsmatrix als eingeschränkt identifiziert, wenn eine Zeile oder Spalte, zu der die Vorcodierungsmatrix gehört, nach der Gruppierung eingeschränkt ist; und
eine Elementengruppierungseinheit, die zur Speicherung der Gruppierungsregel konfiguriert ist, wonach Vorcodierungsmatrizen mit identischen Vorcodierungsmatrixelementen in den Codebüchern als Gruppe genommen werden.

6. Vorrichtung nach Anspruch 5, ferner umfassend:
ein Einstellungsmodul (303), das zur Einstellung von Informationen zur Identifizierung der jeweiligen Gruppen in den Codebüchern in den jeweiligen Rängen als eingeschränkt oder uneingeschränkt in einer Option zur Einschränkung von Codebuch-Untersätzen der Signalisierung auf höherer Schicht konfiguriert ist.

7. Vorrichtung nach Anspruch 6, ferner umfassend:
ein Übertragungsmodul (304), das zur Übertragung der Signalisierung auf der höheren Schicht an ein UE konfiguriert ist, um dem UE den Befehl zur Anzeige eines PMI und/oder eines RI je nach der Option zur Einschränkung von Codebuch-Untersätzen in der Signalisierung auf höherer Schicht zu geben.

8. Vorrichtung zur Anzeige von Kanaldaten, umfassend:
ein Empfangsmodul (401), das zum Empfang der Signalisierung auf höherer Schicht nach Anspruch 4 konfiguriert ist und
ein Anzeigemodul (402), das zur Anzeige eines PMI und/oder RI je nach der Option zur Einschränkung des Codebuch-Subsatzes in der Signalisierung auf höherer Schicht konfiguriert ist.

## Revendications

1. Procédé pour traiter une limitation de sous-ensemble de livre de codes, comprenant :
le groupement (101) de matrices de précodage dans un livre de codes à chaque rang dans un mode de transmission par N ports d'antenne respectivement, dans lequel N est un nombre entier naturel, et dans le mode de transmission avec N ports d'antenne, les valeurs de rang peuvent être n'importe quel nombre entre 1 et N, et dans lequel le livre de codes a une structure matricielle ; et
l'identification (102) de l'état de chaque groupe comme étant limité ou non limité par un bit après le groupement, dans lequel limité signifie qu'un groupe n'est pas disponible, et non limité signifie que le groupe est disponible ;
dans lequel le groupement (101) des matrices de précodage dans les livres de codes à des rangs respectifs comprend respectivement l'un quelconque :
du groupement par rangée pour prendre chaque rangée des matrices de précodage dans les livres de codes en tant que groupe ;
du groupement par colonne pour prendre chaque colonne des matrices de précodage dans les livres de codes en tant que groupe ;
du groupement respectivement par rangée et par colonne pour prendre chaque rangée des matrices de précodage et chaque colonne des matrices de précodage dans les livres de codes respectivement en tant que groupes et pour identifier une matrice de précodage comme étant limitée si une rangée ou une colonne, à laquelle la matrice de précodage appartient, est limitée après le groupement ; et
du groupement par élément des matrices de précodage pour prendre les matrices de précodage avec des éléments de matrice de précodage identiques dans les livres de codes en tant que groupe.

2. Procédé selon la revendication 1, comprenant en outre :
la définition (103) d'informations pour identifier les groupes respectifs dans les livres de codes aux rangs respectifs comme étant limités ou non limités, dans une option de limitation de sous-ensemble de livre de codes de signalisation de couche supérieure.

3. Procédé selon la revendication 2, comprenant en outre :
la transmission (104) de la signalisation de couche supérieure à un équipement d'utilisateur, UE, pour ordonner à l'UE de rapporter un indicateur de matrice de précodage, PMI, et/ou un indicateur de rang, RI, conformément à l'option de limitation de sous-ensemble de livre de codes dans la signalisation de couche supérieure.

4. Procédé pour rapporter des informations de canal, comprenant :
la réception (201) de la signalisation de couche supérieure selon la revendication 3 ; et
le rapport (202) d'un PMI et/ou d'un RI conformément à l'option de limitation de sous-ensemble de livre de codes dans la signalisation de couche supérieure.

5. Dispositif pour traiter une limitation de sous-ensemble de livre de codes, comprenant :
un module de mémorisation (301) configuré pour mémoriser une règle de groupement selon laquelle des matrices de précodage dans un livre de codes à chaque rang dans un mode de transmission par N ports d'antenne sont groupées, dans lequel N est un nombre entier naturel, et dans le mode de transmission avec N ports d'antenne, les valeurs de rang peuvent être n'importe quel nombre entre 1 et N, et dans lequel le livre de codes a une structure matricielle ; et
un module d'identification (302) configuré pour identifier l'état de chaque groupe comme étant limité ou non limité par un bit, après que les matrices de précodage dans les livres de codes aux rangs respectifs avec N ports d'antenne ont été groupées respectivement selon la règle de groupement, dans lequel limité signifie qu'un groupe n'est pas disponible, et non limité signifie que le groupe est disponible ;
dans lequel le module de mémorisation (301) comprend l'une quelconque ou une combinaison des unités suivantes :
une unité de groupement par rangée configurée pour mémoriser la règle de groupement selon laquelle chaque rangée des matrices de précodage dans les livres de codes est prise en tant que groupe ;
une unité de groupement par colonne configurée pour mémoriser la règle de groupement selon laquelle chaque colonne des matrices de précodage dans les livres de codes est prise en tant que groupe ;
une unité de groupement par rangée et par colonne configurée pour mémoriser la règle de groupement selon laquelle chaque rangée des matrices de précodage et chaque colonne des matrices de précodage dans les livres de codes sont respectivement prises en tant que groupes et pour identifier une matrice de précodage comme étant limitée si une rangée ou une colonne, à laquelle la matrice de précodage appartient, est limitée après le groupement ; et
une unité de groupement par élément configurée pour mémoriser la règle de groupement selon laquelle les matrices de précodage avec des éléments de matrice de précodage identiques dans les livres de codes sont prises en tant que groupe.

6. Dispositif selon la revendication 5, comprenant en outre :
un module de définition (303) configuré pour définir des informations pour identifier les groupes respectifs dans les livres de codes aux rangs respectifs comme étant limités ou non limités, dans une option de limitation de sous-ensemble de livre de codes de signalisation de couche supérieure.

7. Dispositif selon la revendication 6, comprenant en outre :
un module de transmission (304) configuré pour transmettre la signalisation de couche supérieure à un UE pour ordonner à l'UE de rapporter un PMI et/ou un RI conformément à l'option de limitation de sous-ensemble de livre de codes dans la signalisation de couche supérieure.

8. Dispositif pour rapporter des informations de canal, comprenant :
un module de réception (401) configuré pour recevoir la signalisation de couche supérieure selon la revendication 4 ; et
un module de rapport (402) configuré pour rapporter un PMI et/ou un RI conformément à l'option de limitation de sous-ensemble de livre de codes dans la signalisation de couche supérieure.
